# EUROPEAN PATENT SPECIFICATION

(11) **EP 3 819 962 B1**
(45) Date of publication and mention of the grant of the patent: **31.07.2024**
(21) Application number: 20206270.9
(22) Date of filing: 06.11.2020
(51) Int. Cl.: H01M 4/04, H01M 4/136, H01M 4/36, H01M 4/38, H01M 10/0525, H01M 10/0562

(54) **NEGATIVE ELECTRODE LAYER FOR ALL-SOLID SECONDARY BATTERY, ALL-SOLID SECONDARY BATTERY INCLUDING THE SAME, AND PREPARATION METHOD THEREOF**
NEGATIVE ELEKTRODENSCHICHT FÜR EINE FESTKÖRPERSEKUNDÄRBATTERIE, FESTKÖRPERSEKUNDÄRBATTERIE DAMIT UND VERFAHREN ZU IHRER HERSTELLUNG
COUCHE D'ÉLECTRODE NÉGATIVE POUR BATTERIE SECONDAIRE TOUT SOLIDE, BATTERIE SECONDAIRE TOUTSOLIDE LA COMPRENANT ET SON PROCÉDÉ DE PRÉPARATION

(30) Priority: 08.11.2019 KR 20190143001
(43) Date of publication of application: 12.05.2021
(73) Proprietor: Samsung SDI Co., Ltd., Yongin-si, Gyeonggi-do 17084 (KR)
(72) Inventor: Lee, Minsuk, 17084 Gyeonggi-do (KR); Ryu, Younggyoon, 17084 Gyeonggi-do (KR)
(74) Representative: Taor, Simon Edward William

(56) References cited:
- CN-A- 109 841 817
- KR-A- 20180 036 413

## Description

### CROSS-REFERENCE TO RELATED APPLICATION

This application claims priority to and the benefit of Korean Patent Application No. 10-2019-0143001, filed on November 8, 2019, in the Korean Intellectual Property Office.

### BACKGROUND

### 1. Field

One or more embodiments of the present disclosure relate to negative electrode layers for all-solid secondary batteries, all-solid secondary batteries including the same, and preparation methods thereof.

### 2. Description of Related Art

In existing lithium secondary batteries, a lack of stability has arisen because liquid electrolytes used therein easily ignite when exposed to water in air. Such stability problems are becoming serious issues with the emergence of electric vehicles. Accordingly, extensive research has recently been conducted into all-solid secondary batteries using a solid electrolyte including an inorganic material for the purpose of improving safety. All-solid secondary batteries have drawn attention as next-generation secondary batteries in terms of their stability, high energy density, high output, long lifespan, simplified manufacturing process, large size, compactness, and low costs.

An all-solid secondary battery includes a positive electrode layer, a solid electrolyte layer, and a negative electrode layer. The solid electrolyte layer should have high ionic conductivity and low electronic conductivity. As a solid electrolyte layer in all-solid secondary batteries, a sulfide-based solid electrolyte, an oxide-based solid electrolyte, and/or the like may be used. Among them, the sulfide-based solid electrolyte is activated by pressing under high-temperature and high-pressure conditions. However, during a pressing process, low temperature or low pressure may increase cell resistance, thereby deteriorating or reducing battery performance. It is difficult to apply lithium metal as a negative active material under such high-temperature and high-pressure conditions. The lithium metal behaves like a gel under high-temperature and high-pressure conditions. Therefore, deformation of an electrode plate may occur during an early stage of the pressing process, causing short-circuits after the manufacture of cells or during charging.

KR 20180036413 A discloses an all solid state battery comprising a sulfide solid electrolyte having fluorine. More particularly, the sulfide solid electrolyte containing a fluorine element forms an LiF layer at an interface between a solid electrolyte and a negative electrode through charge and discharge, thereby suppressing the decomposition of the electrolyte and the growth of lithium dendrite which occur upon charging/discharging of a battery and improving the battery performance.

### SUMMARY

One or more embodiments of the present disclosure include a novel negative electrode layer for all-solid secondary batteries.

One or more embodiments include an all-solid secondary battery having improved performance by including embodiments of the negative electrode layer described herein and a preparation method thereof.

Additional aspects or embodiments will be set forth in part in the description which follows and, in part, will be apparent from the description, or may be learned by practice of the presented embodiments of the disclosure.

According to an aspect, there is provided a negative electrode layer as set out in claim 1. Additional features are set out in claims 2 to 4.

According to an aspect, there is provided an all-solid secondary battery layer as set out in claim 5. Additional features are set out in claims 6 to 9.

According to an aspect, there is provided a method as set out in claim 10. Additional features are set out in claim 11.

### BRIEF DESCRIPTION OF THE DRAWINGS

The above and other aspects and features of certain embodiments of the disclosure will be more apparent from the following description taken in conjunction with the accompanying drawings, in which:
FIG. 1A is a diagram illustrating a process of plating lithium on a negative current collector;
FIG. 1B is a diagram illustrating a process of forming a lithium metal composite (LMC) layer after pressing a resultant of FIG. 1A;
FIG. 2 is a scanning electron microscope (SEM) image showing a surface of lithium plated according to Preparation Example 1;
FIG. 3 is a transmission electron microscope (TEM) image showing a surface and a cross-section of an LMC layer after pressing;
FIG. 4 is an enlarged view of a cross-section of an LMC layer obtained according to Preparation Example 1;
FIG. 5 is a graph illustrating X-photoelectron spectroscopy (XPS) analysis results of negative electrode layers obtained according to Preparation Example 1 and Comparative Preparation Example 1;
FIG. 6 is a graph illustrating analysis results of Young's moduli of negative electrode layers obtained according to Preparation Example 1 and Comparative Preparation Example 1;
FIG. 7 is a diagram illustrating a structure of an all-solid secondary battery according to an embodiment;
FIG. 8 is a diagram illustrating a structure of an all-solid secondary battery according to another embodiment;
FIG. 9 is a diagram illustrating a structure of an all-solid secondary battery according to another embodiment; and
FIG. 10 is a graph illustrating lifespan characteristics of all-solid secondary batteries prepared according to Example 8 and Comparative Example 5.

### DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Expressions such as "at least one of," when preceding a list of elements, modify the entire list of elements and do not modify the individual elements of the list.

A negative electrode layer for all-solid secondary batteries, an all-solid secondary battery including the same, and a preparation method thereof will be exemplarily described herein in more detail with reference to the accompanying drawings.

Provided is a negative electrode layer for sulfide-based solid electrolyte-containing all-solid secondary batteries. The negative electrode layer includes a negative current collector and a first negative active material layer, wherein the first negative active material layer includes a lithium metal composite including a lithium metal and an inorganic negative active material.

According to embodiments of the inorganic negative active material is a lithium fluoride, a lithium oxide, a lithium carbonate, a lithium hydroxide, or any combination thereof.

In embodiments of the lithium metal composite, an amount of the lithium metal is in a range of 70 parts by weight to 99 parts by weight, for example, 80 parts by weight to 99 parts by weight, or, for example, 95 parts by weight to 98 parts by weight based on 100 parts by weight of the lithium metal composite. When the amount of the lithium metal is within any of the above ranges, the lithium metal composite has good elasticity and hardness.

When the lithium metal is used as a negative active material in an all-solid secondary battery including a sulfide-based solid electrolyte, the lithium metal may be liquefied due to a softness of the lithium metal, thereby causing deformation of an electrode plate under high-temperature and high-pressure conditions applied to a laminated structure of a negative electrode layer, an electrolyte layer, and a positive electrode. In addition, a part of the lithium metal may penetrate into the sulfide-based solid electrolyte, thereby causing short-circuits during charging or a decrease in lifespan due to internal cracks and short-circuits. To address these issues, a method of introducing a lithium (Li) free polymer or a carbon layer as a negative active material of a negative active material layer has been suggested. However, according to such a method, although a short-circuit does not occur during a battery manufacturing process, long lifespan of such an all-solid secondary battery cannot be expected due to limited Li content in the batteries.

Thus, without being limited by any particular mechanism or theory, the present inventors have conducted research to address the above-mentioned issues and found that lifespan of an all-solid secondary battery may be increased by introducing lithium into the negative electrode layer in the form of a lithium metal composite (LMC) having high elasticity and hardness as another Li reservoir as well as the positive electrode layer, thereby completing the manufacture of the all-solid secondary battery.

Because the negative electrode layer for all-solid secondary batteries according to an embodiment includes the LMC, liquefaction and short-circuits do not occur during a pressing process performed with a high pressure for preparing batteries. In addition, the negative electrode layer according to an embodiment is electrochemically stable against a sulfide-based solid electrolyte and may increase discharge capacity because lithium loss caused by irreversible reaction during initial charging by locating an Li reservoir in the negative electrode layer. Also, lifespan of the batteries may further be increased by making up for lithium loss caused by side reactions during charging and discharging.

According to embodiments of the disclosure, a thickness of the first negative active material layer is in a range of 1 µm to 20 µm, for example, 1 µm to 10 µm, for example, 2 µm to 8 µm, or, for example, 4 µm to 6 µm.

A thin film of a metal or a metalloid may further be included between the negative current collector and the first negative active material layer. The metal or metalloid thin film may include gold (Au), silver (Ag), magnesium (Mg), zinc (Zn), silicon (Si), tin (Sn), platinum (Pt), palladium (Pd), aluminum (Al), bismuth (Bi), or any combination thereof, and a thickness of the metal or metalloid thin film may be in a range of 1 nm to 800 nm, or, for example, 10 nm to 30 nm.

The first negative active material layer may have a porous structure. In a cross-section of the first negative active material layer, a length of a major axis of a pore may be in a range of 50 nm to 5 µm, for example, 100 nm to 3 µm, or, for example, 100 nm to 2 µm. A length of a minor axis of the pore may be in a range of 10 nm to 1 µm, for example, 50 nm to 500 nm, or, for example, 50 nm to 250 nm. In the cross-section of the first negative active material layer, a total pore area per unit area is less than 50%, for example, less than 30%, or, for example, in a range of 5% to 15%. When the total pore area per unit area is within any of the ranges above, all-solid secondary batteries having high voltage, high capacity, and/or long lifespan characteristics may be manufactured.

The negative electrode layer according to an embodiment may further include a second negative active material layer. The second negative active material layer may be formed on the first negative active material layer.

The second negative active material layer may include a metal or metalloid element or any combination thereof which is alloyable with lithium. The second negative active material layer may include a metal layer including lithium and/or a lithium alloy. According to an embodiment, the surface of the second negative active material layer may include lithium fluoride (LiF).

The second negative active material layer may be a lithium free region not including lithium metal and/or lithium alloy during an early stage and/or after discharging of an all-solid secondary battery. Before charging, the negative electrode layer may have a structure including a negative current collector, a coating layer for lithium nucleation (a metal layer and/or a metalloid layer), and a first negative active material layer. After charging the negative electrode layer, the second negative active material layer may be formed on the first negative active material layer. The second negative active material layer may be non-porous.

A carbon layer may further be included between the first negative active material layer and a sulfide-based solid electrolyte-containing solid electrolyte layer. The carbon layer may be formed of, for example, carbon black, carbon fiber, graphite, carbon nanotube, or any combination thereof. The carbon layer formed as described above lowers resistance between the first negative active material layer and the solid electrolyte layer and assists uniform (e.g., substantially uniform) nucleation during the early stage and lithium grows between the LMC and carbon of the carbon layer, thereby inhibiting or reducing the formation of lithium dendrites. Thus, an all-solid secondary battery including the negative electrode layer further including the carbon layer may have more improved lifespan characteristics compared to an all-solid secondary battery including a negative electrode layer not including a carbon layer.

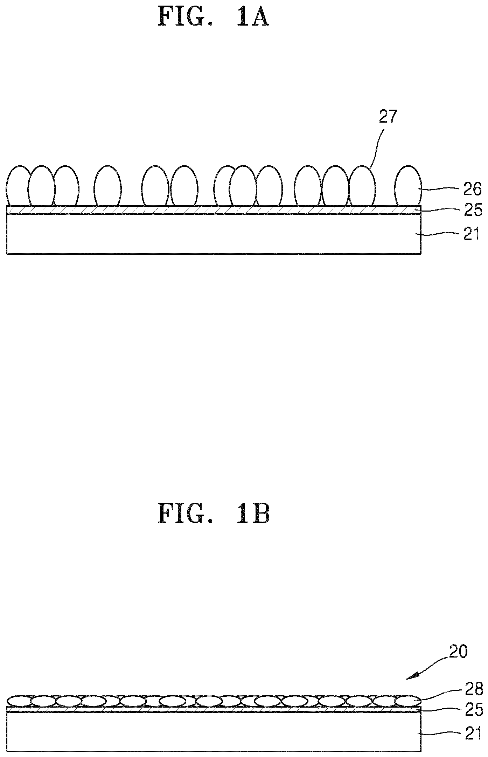

Referring to FIGS. 1A and 1B, a method of preparing a negative electrode layer for all-solid secondary batteries according to an embodiment will be further described.

A lithium metal composite (LMC) layer 28, as a negative active material layer, is formed on a negative current collector 21.

As illustrated in FIG. 1A, first, a metal coating layer 25 for lithium nucleation is formed on the negative current collector 21. The metal coating layer 25 for lithium nucleation may be omitted.

The metal coating layer 125 for lithium nucleation enables uniform (e.g., substantially uniform) Li nucleation during plating, thereby promoting lithium plating and assisting uniform (e.g., substantially uniform) plating. The metal coating layer 25 for lithium nucleation may be formed using a metal such as, for example, zinc (Zn), gold (Au), and/or silver (Ag) to a thickness in a range of about 1 nm to 50 nm, for example, 5 nm to 20 nm by using a thermal evaporator, and/or the like.

Then, lithium 26 is plated on the metal coating layer 25 for lithium nucleation. During Li plating, a lithium plate is used as a lithium source. The Li plating may be performed by electroplating, electroless plating, and/or galvanic plating. In some embodiments, the Li plating may be performed by galvanic plating. In some embodiments, the galvanic plating is performed using two electrodes, a bath containing an electrolytic solution including a lithium salt and an organic solvent, and a lithium plate as a lithium source. A galvanic current is supplied to respective terminals of the two electrodes, and then lithium may be plated on the negative current collector in a porous form.

A shape of lithium plated on the metal coating layer 25 for lithium nucleation by the lithium plating varies according to plating conditions. For example, lithium may be formed in the form of strings, moss, branches, spheres, and/or the like.

As shown in FIG. 1A, Li particles tend to grow perpendicularly (e.g., substantially perpendicularly) to the negative current collector 21.

When a separator is located between the current collector and the lithium plate and a constant pressure is applied to the separator, Li 26 grows horizontally (e.g., is compressed horizontally or in a direction substantially parallel to the negative current collector 21) as shown in FIG. 1B. In some embodiments (e.g., in FIGS. 1A and/or 1B), a solid electrolyte interface (SEI) layer 13 is formed on the surface of each particle of the Li 26. The SEI layer 27 is formed from degradation products of the electrolytic solution and a composition and a thickness of the SEI layer 27 may vary according to the composition of the electrolytic solution.

The composition and thickness of the SEI layer 27 may vary according to the composition of the electrolytic solution used during plating. The SEI layer 27 may include, for example, LiF as a main component. When lithium bis(fluorosulfonyl)imide (LiFSI) is used as a lithium salt of the electrolytic solution during plating, the SEI layer 27 may include lithium fluoride (LiF) as a main component. Lithium fluoride (LiF), which is, for example, self-formed on the surface of Li during plating as a SEI layer, is dense and has a Young's modulus in a range of about 65 GPa and a hardness of 1.3 GPa, thereby having high elasticity, hardness, and/or ionic conductivity. Thus, when the Li 26 is surrounded by the SEI layer 27 formed of LiF having high elasticity and/or hardness, a wide range of chemical stability with a voltage of 0 V to 6.5 V (vs. Li/Li⁺) may be obtained.

As described above, the LMC layer has excellent stability against high pressure because the pure Li 26 is surrounded by the SEI layer 27 including LiF. A thickness of the SEI layer 27 is, for example, less than 100 nm, for example, in a range of 1 nm to 80 nm, for example, 1 nm to 60 nm, for example, 1 nm to 50 nm, for example, 1 nm to 30 nm, or, for example, 1 nm to 20 nm.

Subsequently, a pressure is applied to a porous structure of lithium coated with the SEI layer 27 according to the above-described process. For example, in some embodiments, the pressure is applied using a roll press. The pressure may be, for example, 500 MPa or more, for example, 550 MPa or more, for example, in a range of 500 MPa to 700 MPa, or, for example, in a range of 550 MPa to 600 MPa. Because the porous structure of Li becomes thinner and smoother through this pressing process and the porous structure of Li is surrounded by the SEI layer, pure Li does not (or substantially does not) leak therefrom during the pressing process. The porous structure of Li may be thinned to (e.g., compressed to) a thickness of about 20% of an initial thickness.

Because the lithium metal composite (LMC) layer 28 obtained according to the above-described process is prepared at a high pressure of 500 MPa or more, the LMC layer 28 is suitable as a negative active material of a sulfide-based all-solid secondary battery that utilizes (or requires) pressing with pressure in a range of 400 MPa to 550 MPa. The LMC layer 28 has a thickness in a range of 5 µm to 50 µm before pressing and a thickness in a range of 1 µm to 10 µm, or, for example, 4 µm to 6 µm after pressing. In addition, the LMC layer 28 has a surface roughness (Rmax) in a range of 150 nm to 300 nm. When a surface roughness of the LMC layer 28 is within the range above, occurrence of cracks and short-circuits may be prevented or reduced in advance in the solid electrolyte layer while pressing cells.

The LMC layer may include SEI products. For example, the LMC layer may include LiF, Li₂O, Li₂CO₃, LiOH, or any combination thereof and LiF may account for about 80 wt% or higher of the LMC layer based on the total weight of the LMC layer (e.g., the LiF may be present in the LMC layer in an amount of 80 wt% or more based on the total weight of the LMC layer). When the amount of LiF in the LMC layer is within the range above, oxidation of the solid electrolyte layer, which may be caused in the case where the amount of SEI products including oxygen increases, and deterioration (or reduction) of performance of the solid electrolyte layer caused by an increase in electronic conductivity and a decrease in ionic conductivity may also be prevented or reduced.

The electrolytic solution used during Li plating may include a lithium salt and an organic solvent.

The lithium salt may include, for example, at least one selected from LiPF₆, LiBF₄, LiCF₃SO₃, Li(CF₃SO₂)₂N, LiC₂F₅SO₃, Li(FSO₂)₂N(LiFSI), LiC₄F₉SO₃, LiN(SO₂CF₂CF₃)₂, and compounds represented by the following formulae.

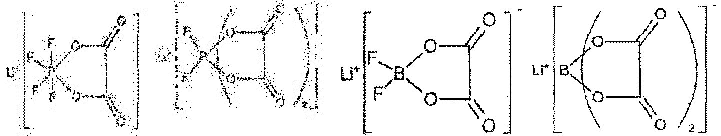

In the electrolytic solution, a concentration of the lithium salt is in a range of 0.01 M to 5.0 M, for example, 0.05 M to 5.0 M, for example, 0.1 M to 5.0 M, or, for example, 0.1 M to 2.0 M. When the concentration of the lithium salt is within any of the ranges above, a thin and uniform (e.g., substantially uniform) LMC layer to which a high voltage is applicable may be prepared (e.g., it may be suitable to apply a high voltage to the LMC layer).

As the organic solvent, a mixed solvent including a glyme-based solvent and a fluorinated ether-based solvent may be used. The glyme-based solvent includes at least one selected from ethyleneglycol, dimethyl ether (DME), tetraethyleneglycol dimethyl ether (TEGDME), and diethylene glycol dimethyl ether (DEGDME).

Examples of the fluorinated ether-based solvent may include 1,1,2,2-tetrafluoroethyl-2,2,3,3-tetrafluoropropyl ether (Product Name: HFE-458), 1,1,2,2-tetrafluoroethyl-1H,1H,5H-octafluoropentyl ether (Product Name: HFE-6512), 1,1,2,2-tetrafluoroethyl-2,2,2-trifluoroethyl ether (Product Name: HFE-347), or any mixture thereof.

An amount of the fluorinated ether-based solvent may be in a range of 10 vol% to 95 vol%, for example, 20 vol% to 90 vol%, for example, 30 vol% to 85 vol%, or, for example, 50 vol% to 80 vol%.

The glyme-based solvent has the ability to dissolve a lithium salt such as LiFSI and the fluorinated ether-based solvent does not have (or substantially does not have) the ability to dissolve a lithium salt. The fluorinated ether-based solvent is used for diluting and may make a locally high-concentration lithium salt electrolytic solution. Thus, when the mixed solvent is used, Li is uniformly (e.g., substantially uniformly) plated at a locally high concentration.

When the above-described mixed solvent is used, not only the lithium layer may be uniformly (e.g., substantially uniformly) formed in the form of a thin film but also it is possible to apply a high pressure thereto.

In some embodiments, the pressing of the plated lithium layer is performed by roll-pressing the plated Li film at a temperature in a range of 5 °C to 90 °C at a pressure of 500 MPa or more.

The plated Li film formed on the negative current collector according to the above-described process is porous, and an electrodeposition density of lithium is 0.2 g/cm³ or less, or, for example, in a range of 0.05 g/cm³ to 0.15 g/cm³.

As shown in FIG. 1B, by pressing, the plated Li film loses porosity (e.g., pore volume and/or pore number may be reduced) and becomes flat (e.g., substantially flat) and the SEI layer (LiF) and Li are compressed to improve electrical connection between Li particles, thereby forming a negative electrode layer 20 having a structure in which the metal coating layer 25 for lithium nucleation and the lithium metal composite layer 28 are sequentially stacked on the negative current collector 21.

According to the above-described process, the negative electrode layer 20 including the negative current collector 21 and the lithium metal composite layer (first negative active material layer) 28 including the lithium metal composite is prepared. The metal coating layer 25 for lithium nucleation may further be formed between the negative current collector 21 and the first negative active material layer .

The LMC layer 28 according to an embodiment has mechanical properties significantly different from those of Li metal. The LMC layer has a Young's modulus in a range of 10 GPa to 25 GPa, or, for example, 12 GPa to 22 GPa. Young's moduli of existing lithium layers are in a range of 4 GPa to 7 GPa. Because the LMC layer according to an embodiment has a higher Young's modulus than those of existing lithium layers, thereby having excellent mechanical properties.

As used herein, the term "Young's modulus" has the same meaning as the term "tensile modulus," as used in the art. The tensile modulus is measured by using a dynamic mechanical analysis system (e.g., model DMA800, available from TA Instruments), and a protective layer specimen is prepared in compliance with ASTM standard D412 (Type V specimens). A tensile modulus of the protective layer is obtained by measuring strain change against stress at a rate of 5 mm/min at 25 °C with a relative humidity of about 30%. Based on a stress-strain curve obtained as described above, the tensile modulus is evaluated.

The Young's modulus of the protective layer according to an embodiment may be easily measured by isolating a protective layer of a battery. For example, the Young's modulus of an isolated protective layer may be measured, using the above-described method and device for measuring Young's modulus by one of ordinary skill in the art.

According to another embodiment, provided is an all-solid secondary battery including: a positive electrode layer; a negative electrode layer according to an embodiment; and a solid electrolyte layer including a sulfide-based solid electrolyte interposed between the positive electrode layer and the negative electrode layer.

Hereinafter, the all-solid secondary battery according to exemplary embodiments will be described in more detail.

The all-solid secondary battery according to an embodiment includes: a positive electrode layer; a negative electrode layer; and a solid electrolyte layer interposed between the positive electrode layer and the negative electrode layer, wherein the positive electrode layer includes a positive current collector and a positive active material layer formed on the positive current collector, and the negative electrode layer includes a negative current collector and a first negative active material layer located on the negative current collector and including a lithium metal composite.

### All-solid Secondary Battery

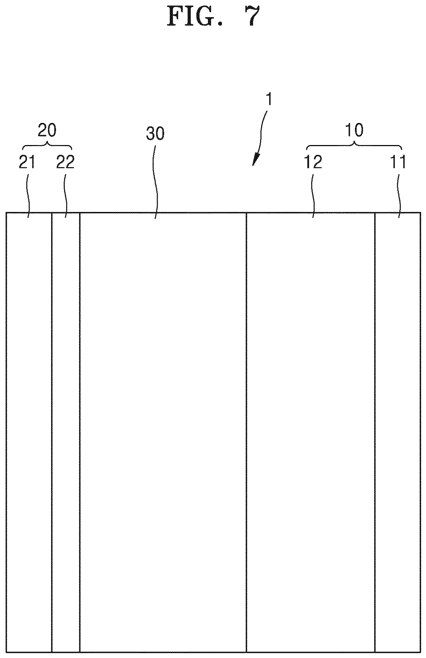

Referring to FIG. 7, the all-solid secondary battery 1 includes: a positive electrode layer 10; a negative electrode layer 20; and a solid electrolyte layer 30 interposed between the positive electrode layer 10 and the negative electrode layer 20, wherein the positive electrode 10 includes a positive current collector 11 and a positive active material layer 12 formed on the positive current collector 11, and the negative electrode layer 20 includes a negative current collector 21 and a first negative active material layer 22 located on the negative current collector 21 and including a lithium metal composite (e.g., an LMC layer).

### Positive Electrode Layer: Positive Current Collector

The positive current collector 11 may be formed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof in the form of a plate, foil, and/or the like. The positive current collector 11 may be omitted.

### Positive Electrode Layer: Positive Active Material

The positive active material layer 12 include, for example, a positive active material and a solid electrolyte. The solid electrolyte included in the positive electrode layer 10 is similar to or different from a solid electrolyte included in the solid electrolyte layer 30. The solid electrolyte and the solid electrolyte layer 30 are further described elsewhere herein.

The positive active material may include any suitable positive active material capable of reversibly absorbing and desorbing lithium ions. Examples of the positive active material may include a lithium transition metal oxide such as, for example, lithium cobalt oxide (LCO), lithium nickel oxide, lithium nickel cobalt oxide, lithium nickel cobalt aluminum oxide (NCA), lithium nickel cobalt manganese oxide (NCM), lithium manganate, lithium iron phosphate, nickel sulfide, copper sulfide, lithium sulfide, iron oxide, and/or vanadium oxide. However, the positive active material of embodiments is not limited thereto and may be any suitable material generally available as a positive active material in the art may also be used. The positive active materials may be used alone or in combination of at least two thereof.

The lithium transition metal oxide may be, for example, one selected from the compounds represented by the following formulae: LiₐA_{1-b}B_{b}D₂ (where 0.90≤a≤1 and 0 ≤b≤0.5); LiₐE_{1-b}B_{b}O_{2-c}D_{c} (where 0.90≤a≤1, 0≤b≤0.5, and 0≤c≤0.05); LiE_{2-b}B_{b}O_{4-c}D_{c} (where 0 ≤b≤0.5 and 0≤c≤0.05); LiₐNi_{1-b-c}Co_{b}B_{c}D_{α} (where 0.90 ≤a≤1, 0≤b≤0.5, 0≤c≤0.05, and 0<α≤2); LiₐNi_{1-b-c}Co_{b}B_{c}O_{2-α}F_{α} (where 0.90≤a≤1, 0≤b≤0.5, 0≤c≤0.05, and 0<α<2); LiₐNi_{1-b-c}Co_{b}B_{c}O_{2-α}F₂ (where 0.90≤a≤1, 0≤b≤0.5, 0≤c≤0.05, and 0 <α<2); LiₐNi_{1-b-c}Mn_{b}B_{c}D_{α} (where 0.90≤a≤1, 0≤b≤0.5, 0≤c≤0.05, and 0<α≤2); LiₐNi_{1-b-c}Mn_{b}B_{c}O_{2-α}F_{α} (where 0.90≤a≤1, 0≤b≤0.5, 0≤c≤0.05, and 0<α<2); LiₐNi_{1-b-c}Mn_{b}B_{c}O_{2-α}F₂ (where 0.90≤a≤1, 0≤b≤0.5, 0≤c≤0.05, and 0<α<2); LiₐNi_{b}E_{c}G_{d}O₂ (where 0.90≤a≤1, 0≤b≤0.9, 0≤c≤0.5, and 0.001≤d≤0.1); LiₐNi_{b}Co_{c}Mn_{d}GₑO₂ (where 0.90≤a≤1, 0≤b≤0.9, 0≤c≤0.5, 0≤d≤0.5, and 0.001≤e≤0.1); LiₐNiG_{b}O₂ (where 0.90≤a≤1 and 0.001≤b≤0.1); LiₐCoG_{b}O₂ (where 0.90≤a≤1 and 0.001≤b≤0.1); LiₐMnG_{b}O₂ (where 0.90≤a≤1 and 0.001≤b≤0.1); LiₐMn₂G_{b}O₄ (where 0.90≤a≤1 and 0.001≤b≤0.1); QO₂; QS₂; LiQS₂; V₂O₅; LiV₂O₅; LiIO₂; LiNiVO₄; Li_{(3-f)}J₂(PO₄)₃ (where 0≤f≤ 2); Li_{(3-f)}Fe₂(PO₄)₃ (where 0≤f≤2); and LiFePO₄. In the foregoing compounds, A is Ni, Co, Mn, or any combination thereof; B is Al, Ni, Co, Mn, Cr, Fe, Mg, Sr, V, a rear earth element, or any combination thereof; D is O, F, S, P, or any combination thereof; E is Co, Mn, or any combination thereof; F is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof. The above-described compound having a coating layer formed on the surface thereof, or a mixture of the above-described compound and a compound having a coating layer may be used. The coating layer added to the surface of the above-described compound may include a compound of a coating element such as an oxide, hydroxide, oxyhydroxide, oxycarbonate, and/or hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr, or any mixture thereof. The coating layer may be formed by using any suitable method which does not (or substantially does not) adversely affect physical properties of the cathode active material. As the coating method, spray coating and/or immersing may be used. The coating method may be any suitable coating method generally used in the art, and thus, further description thereof is not necessary here.

The positive active material includes, for example, a lithium salt of a transition metal oxide having a layered rock salt type structure (e.g., a layered rock salt kind of structure) among the above-described lithium transition metal oxides. The aforementioned "layered rock salt structure" is a structure in which a layer of oxygen atoms and a layer of metal atoms are alternately arranged regularly in a <111> direction (e.g., a (111) crystal plane) of a cubic rock salt type structure (e.g., a cubic rock salt kind of structure) such that each atomic layer forms a two-dimensional plane. The aforementioned "cubic rock salt type structure" refers to a sodium chloride (NaCl) type or kind of structure, as one of the crystal structures, which may be, for example, a structure in which face centered cubic lattices (FCCs) respectively formed of cations and anions are misarranged (e.g., shifted) by one half the ridge of each unit lattice. Examples of the lithium transition metal oxide having such a layered rock salt type structure may be a ternary transition metal oxide represented by LiNiₓCo_{y}Al_{z}O₂ (NCA) or LiNiₓCo_{y}Mn_{z}O₂ (NCM) (where 0<x<1, 0<y<1, 0<z<1, and x+y+z=1). When the positive active material includes a ternary lithium transition metal oxide having a layered rock salt type structure, the all-solid secondary battery 1 has increased energy density and/or improved thermal stability.

The positive active material may be covered by a coating layer as described above. The coating layer may be any suitable coating layer generally used in the art as a coating layer of a positive active material of all-solid secondary batteries. The coating layer may include, for example, Li₂O-ZrO₂ (LZO).

When the positive active material includes nickel (Ni) as a ternary lithium transition metal oxide such as NCA or NCM, elution of metal of the positive active material may be reduced during charging by increasing capacity density of the all-solid secondary battery 1. As a result, cycle characteristics of the all-solid secondary battery 1 may be improved during charging.

The positive active material may have, for example, a particulate shape such as a spherical shape or an oval shape. A particle diameter of the positive active material is not particularly limited in embodiments but may be within any suitable range applicable to positive active materials of existing all-solid secondary batteries. An amount of the positive active material of the positive electrode 10 is not particularly limited in embodiments but may be within any suitable range applicable to positive electrodes of all-solid secondary batteries.

### Positive Electrode Layer: Solid Electrolyte

The positive active material layer 12 may include, for example, a solid electrolyte. The solid electrolyte included in the positive electrode layer 10 may be the same as or different from a solid electrolyte included in the solid electrolyte layer 30. The solid electrolyte and the solid electrolyte layer 30 are further described elsewhere herein.

The solid electrolyte included in the positive active material layer 12 may have a smaller average particle diameter D50 than that of the solid electrolyte included in the solid electrolyte layer 30. For example, the average particle diameter D50 of the solid electrolyte included in the positive active material layer 12 may be 90% or less, 80% or less, 70% or less, 60% or less, 50% or less, 40% or less, 30% or less, or 20% or less of the average particle diameter D50 of the solid electrolyte included in the solid electrolyte layer 30.

### Positive Electrode Layer: Binder

The positive active material layer 12 may include a binder. The binder may include, for example, styrene butadiene rubber (SBR), polytetrafluoroethylene, polyvinylidene fluoride, and/or polyethylene.

### Positive Electrode Layer: Conductive Material

The positive active material layer 12 may include a conductive material. The conductive material may include graphite, carbon black, acetylene black, Ketjen black, carbon fiber, and/or metal powder.

### Positive Electrode Layer: Other Additives

The positive electrode layer 10 may further include, for example, a filler, a coating agent, a dispersant, and/or an ion-conductive adjuvant, in addition to the positive active material, the solid electrolyte, the binder, and the conductive material as described above.

As the filler, the coating agent, the dispersant, and/or the ion-conductive adjuvant which may be included in the positive electrode layer 10, any suitable materials generally used in electrodes of all-solid secondary batteries may be used.

### Solid Electrolyte Layer

### Solid Electrolyte Layer: Sulfide-based Solid Electrolyte

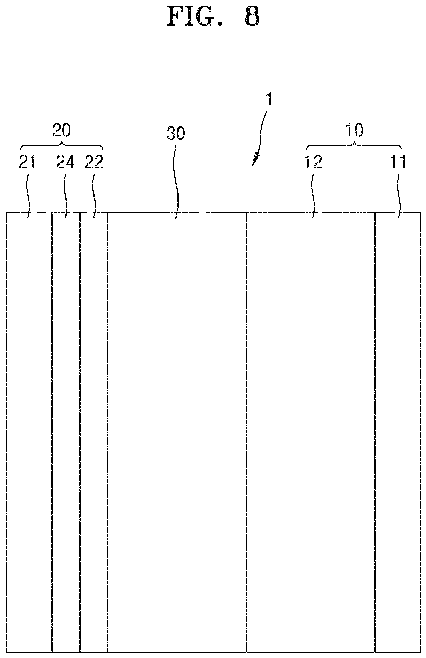

Referring to FIGS. 7 and 8, the solid electrolyte layer 30 includes a sulfide based solid electrolyte interposed between the positive electrode 10 and the negative electrode layer 20.

For example, the sulfide-based solid electrolyte includes at least one selected from compounds represented by the following formulae: Li₂S-P₂S₅, Li₂S-P₂S₅-LiX (where X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers and Z is Ge, Zn, or Ga), Li₂S-GeS₂, Li₂S-SiS₂-Li₃PO₄, Li₂S-SiS₂-LiₚMO_{q} (where p and q are positive numbers and M is P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be prepared by treating a starting material such as Li₂S and P₂S₅ by melt quenching and/or mechanical milling. In addition, after such treatment, heat treatment may be performed. The solid electrolyte may be in an amorphous state, a crystalline state, or a mixed state thereof. In addition, the solid electrolyte may be a solid electrolyte including sulfur (S), phosphorus (P), and/or lithium (Li) as components among materials of the above-described sulfide-based solid electrolyte. For example, the solid electrolyte may be a material including Li₂S-P₂S₅. When the material including Li₂S-P₂S₅ is used as the sulfide-based solid electrolyte material constituting the solid electrolyte, a mixing ratio of Li₂S and P₂S₅ may be, for example, in a range from 50:50 to 90:10.

The sulfide-based solid electrolyte may be, for example, an argyrodite-type component (e.g., an argyrodite kind of component) including at least on selected from Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, the sulfide-based solid electrolyte may have a structure or molecular geometry matching that of argyrodite. In some embodiments the sulfide-based solid electrolyte may have an orthorhombic pyramidal structure. In some embodiments, the sulfide-based solid electrolyte may be an argyrodite-type including at least one selected from Li₆PS₅Cl, Li₆PS₅Br, and Li₆PS₅I.

A density of the argyrodite-type solid electrolyte may be in a range of 1.5 g/cc to 2.0 g/cc. Because the argyrodite-type solid electrolyte has a density of 1.5 g/cc or more, internal resistance of the all-solid secondary battery may be reduced and penetration of the solid electrolyte may be effectively inhibited or reduced.

For example, the solid electrolyte may have a modulus of elasticity in a range of 15 GPa to 35 GPa.

### Solid Electrolyte Layer: Binder

The solid electrolyte layer 30 may include a binder. Examples of the binder included in the solid electrolyte layer 30 may include styrene butadiene rubber (SBR), polytetrafluoroethylene, polyvinylidene fluoride, and polyethylene. However, the binder is not limited thereto in embodiments and any suitable compound generally used as a binder in the art may also be used. The binder of the solid electrolyte layer 30 may be the same or different from the binder included in the positive active material layer 12 and the negative active material layer 22.

### Negative Electrode Layer

### Structure of Negative Electrode Layer

A thickness of the first negative active material layer may be, for example, 50% or less, 40% or less, 30% or less, 20% or less, 10% or less, or 5% or less of a thickness of the positive active material layer. The thickness of the first negative active material layer may be, for example, in a range of 1 µm to 20 µm, 2 µm to 10 µm, or 3 µm to 7 µm. As the thickness of the first negative active material layer considerably decreases, lithium dendrites formed between the first negative active material layer 22 and the negative current collector 21 causes damages to the first negative active material layer, making it difficult to improve cycle characteristics of the all-solid secondary battery 1. As the thickness of the negative active material layer considerably increases, energy density of the all-solid secondary battery 1 decreases and internal resistance in the all-solid secondary battery 1 increases by or at the first negative active material layer, making it difficult to improve cycle characteristics of the all-solid secondary battery 1.

As the thickness of the first negative active material layer decreases, charging capacity of the first negative active material layer decreases. A charging capacity of the first negative active material layer 22 is, for example, 50% or less, 40% or less, 30% or less, 20% or less, 10% or less, 5% or less, or 2% or less of a charging capacity of the positive active material layer 12. A charging capacity of the first negative active material layer 22 is, for example, in a range of 0.1% to 50%, 0.1% to 40%, 0.1% to 30%, 0.1% to 20%, 0.1% to 10%, 0.1% to 5%, or 0.1% to 2% of the charging capacity of the positive active material layer 12. As the charging capacity of the first negative active material layer 22 considerably decreases, the first negative active material layer 22 becomes too thin so that lithium dendrites formed between the first negative active material layer 22 and the negative current collector 21 during repeated charging and discharging processes causes damages to the first negative active material layer 22, making it difficult to improve cycle characteristics of the all-solid secondary battery 1. As the charging capacity of the first negative active material layer 22 considerably increases, the energy density of the all-solid secondary battery 1 decreases and internal resistance of the all-solid secondary battery 1 increases by the first negative active material layer 22, making it difficult to improve cycle characteristics of the all-solid secondary battery 1.

The charging capacity of the positive active material layer 12 is obtained by multiplying a charging capacity density (mAh/g) of the positive active material by a mass of the positive active material of the positive active material layer 12. When various types (or kinds) of positive active materials are used, charging capacity × mass values for each of the positive active materials are respectively calculated and a sum of the values is regarded as the charging capacity of the positive active material layer 12. The charging capacity of the first negative active material layer 22 is calculated in the same manner. For example, the charging capacity of the first negative active material layer 22 is obtained by multiplying the charging capacity (mAh/g) of the negative active material by a mass of the negative active material of the first negative active material layer 22. When various types or kinds of negative active materials are used, charging capacity × mass values for each of the negative active materials are respectively calculated and a sum of the values is regarded as the charging capacity of the first negative active material layer 22. In this case, the charging capacity densities of the positive active material and the negative active material are capacities estimated using an all-solid half-cell to which lithium metal is applied as a counter electrode. The charging capacities of the positive active material layer 12 and the first negative active material layer 22 are also directly measured using the all-solid half-cell. The charging capacity density is calculated by dividing the charging capacity by the mass of each active material. In some embodiments, the charging capacities of the positive active material layer 12 and the first negative active material layer 22 may be initial charging capacities measured during charging of a first cycle.

### Negative Electrode Layer: Negative Current Collector

The negative current collector 21 is formed of a material, which does not react, e.g., does not form (or substantially does not form) an alloy and/or a compound, with lithium. Examples of the material used to form the negative current collector 10 may include copper (Cu), stainless steel, titanium (Ti), iron (Fe), cobalt (Co), and nickel (Ni), but embodiments are not limited thereto, and any suitable material generally used in the art as an electrode current collector may also be used. A thickness of the negative current collector is, for example, in a range of 1 µm to 20 µm, for example, 5 µm to 15 µm, or, for example, 7 µm to 10 µm.

The negative current collector 10 may be formed of an alloy or a coating material of one or more metals selected from the above-mentioned metals. The negative current collector 10 may be formed in a plate or foil shape.

Referring to FIG. 8, the all-solid secondary battery 1 may further include a thin film 24 including an element capable of forming an alloy with lithium and formed on the negative current collector 21. The thin film 24 is interposed between the negative current collector 21 and the first negative active material layer 22. The thin film 24 includes, for example, an element capable of forming an alloy with lithium. Examples of the element capable of forming an alloy with lithium include gold, silver, zinc, tin, indium, silicon, aluminum, and bismuth, but embodiments are not limited thereto, and any suitable element generally used in the art that is capable of forming an alloy with lithium may also be used. The thin film 24 is formed of any one of the metals or an alloy of various suitable types or kinds of metals. By locating the thin film 24 on the negative current collector 21, for example, a second negative active material layer precipitated between the thin film 24 and the first negative active material layer 22 becomes more flat, thereby further improving cycle characteristics of the all-solid secondary battery 1.

A thickness d24 of the thin film 24 is, for example, in a range of 1 nm to 800 nm, 10 nm to 700 nm, 50 nm to 600 nm, or 100 nm to 500 nm. When the thickness d24 of the thin film 24 is less than 1 nm, it may be difficult to obtain the function (e.g., desired properties) of the thin film 24. As the thickness d24 of the thin film 24 considerably increases, the thin film 24 absorbs lithium, and thus, an amount of lithium precipitates decreases in the negative electrode layer so that the all-solid secondary battery 1 may have decreased energy density and deteriorated or reduced cycle characteristics. The thin film 24 may be formed on the negative current collector 10 by, for example, vacuum deposition, sputtering, and/or plating, but the method of embodiments is not limited thereto and any suitable method of forming the thin film 24 generally used in the art may also be used.

### Negative Electrode Layer: Negative Active Material

The first negative active material layer 22 includes a lithium metal composite including lithium metal and an inorganic negative active material.

### Negative Electrode Layer: Precipitated Layer

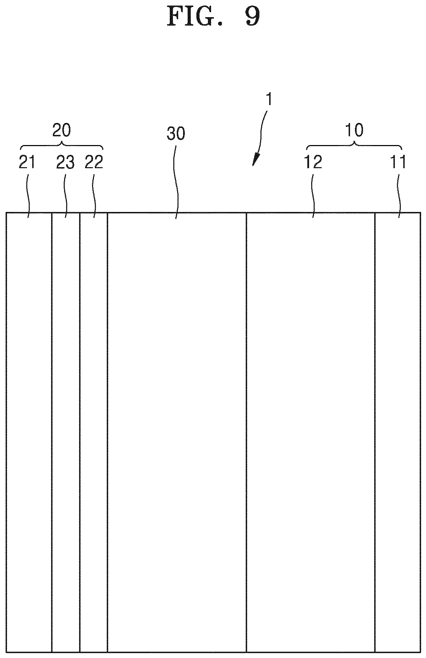

Referring to FIG. 9, the all-solid secondary battery 1 may further include a second negative active material layer 23 located between the negative current collector 21 and the first negative active material layer 22 by charging (e.g., as a result of charging). In some embodiments, the all-solid secondary battery 1 may include the second negative active material layer 23 alone or may further include a second negative active material layer 23 located between the solid electrolyte layer 30 and the first negative active material layer 22 by charging (e.g., as a result of charging). The second negative active material layer 23 is a metal layer including lithium and/or a lithium alloy. The metal layer includes lithium and/or a lithium alloy. Thus, the second negative active material layer 23, as a metal layer including lithium, serves as, for example, an Li reservoir. Examples of the lithium alloy may include an Li-Al alloy, an Li-Sn alloy, an Li-In alloy, an Li-Ag alloy, an Li-Au alloy, an Li-Zn alloy, an Li-Ge alloy, and/or an Li-Si alloy, but embodiments are not limited thereto, and any suitable lithium alloy generally available in the art may also be used. The second negative active material layer 23 may be formed of any one of the alloy and/or lithium, and/or an alloy of various suitable types or kinds of metals.

A thickness d23 of the second negative active material layer 23 may be in a range of, but embodiments are not limited to, 1 µm to 1000 µm, 1 µm to 500 µm, 1 µm to 200 µm, 1 µm to 150 µm, 1 µm to 100 µm, or 1 µm to 50 µm. When the thickness d23 of the second negative active material layer 23 considerably decreases, the second negative active material layer 23 may not suitably or appropriately serve as the Li reservoir. When the thickness d23 of the second negative active material layer 23 considerably increases, mass and volume of the all-solid secondary battery 1 increase and cycle characteristics may deteriorate or be reduced. The second negative active material layer 23 may be, for example, a metal foil having a thickness within any of the ranges described above.

In the all-solid secondary battery 1, the second negative active material layer 23 may be located between the negative current collector 21 and the first negative active material layer 22 before assembling the all-solid secondary battery 1 or precipitated between the negative current collector 21 and the first negative active material layer 22 after assembling the all-solid secondary battery 1.

When the second negative active material layer 23 is located between the negative current collector 21 and the first negative active material layer 22 before assembling the all-solid secondary battery 1, the second negative active material layer 23, as a metal layer including lithium, serves as an Li reservoir. Cycle characteristics of the all-solid secondary battery 1 including the second negative active material layer 23 may further be improved. For example, in some embodiments, before assembling the all-solid secondary battery 1, an Li foil is located between the negative current collector 21 and the first negative active material layer 22.

When the second negative active material layer 23 is formed by charging after assembling the all-solid secondary battery 1, the second negative active material layer 23 is not included while assembling the all-solid secondary battery 1, and thus, energy density of the all-solid secondary battery 1 increases. For example, the all-solid secondary battery 1 is charged to exceed the charging capacity of the first negative active material layer 22 during charging. That is, in some embodiments, the first negative active material layer 22 is overcharged. During the early stage of charging, lithium is absorbed to the first negative active material layer 22. That is, in some embodiments, the negative active material included in the first negative active material layer 22 forms an alloy or compound with lithium ions migrating from the positive electrode layer 10. When charging is performed to exceed the capacity of the first negative active material layer 22, lithium is precipitated, for example, on the rear side of the first negative active material layer 22, e.g., between the negative current collector 21 and the first negative active material layer 22, and a metal layer corresponding to the second negative active material layer 23 is formed by the precipitated lithium. The second negative active material layer 23 is a metal layer mainly formed of lithium (e.g., lithium metal). Such results are obtained because the negative active material included in the first negative active material layer 22 is formed of lithium and a material forming an alloy or compound with lithium. During discharging, lithium of the first negative active material layer 22 and the second negative active material layer 23, e.g., metal layer, is ionized and moves toward the positive electrode layer 10. Thus, lithium may be used as a negative active material in the all-solid secondary battery 1. In addition, because the first negative active material layer 22 covers the second negative active material layer 23, the first negative active material layer 22 serves as a protective layer for the second negative active material layer 23, e.g., the metal layer, and prevents or reduces the growth of lithium dendrites. Thus, a short-circuit and a decrease in capacity may be prevented or reduced in the all-solid secondary battery 1, thereby improving cycle characteristics of the all-solid secondary battery 1. In addition, when the second negative active material layer 23 is formed after assembling the all-solid secondary battery 1, the negative current collector 21, the first negative active material layer 22, and a region therebetween are Li-free regions not including lithium in an early stage or after discharging of the all-solid secondary battery 1. In some embodiments, the Li-free regions are regions that are substantially free of lithium (e.g., they only include lithium, if at all, as an incidental impurity) or are completely free of lithium.

A method of preparing an all-solid secondary battery according to an embodiment will now be further described.

The method includes: providing a negative electrode layer according to an embodiment; providing a positive electrode layer; preparing a laminated structure by providing a solid electrolyte layer between the negative electrode layer and the positive electrode layer; and pressing the laminated structure.

In some embodiments, the pressing is performed at a temperature in a range of 25 °C to 90 °C and a pressure of 550 MPa or less, for example, 500 MPa or less, or, for example, 400 MPa to 500 MP, thereby completing preparation of an all-solid secondary battery. Pressing time may vary according to temperature and pressure and may be, for example, less than 30 minutes. In addition, the pressing may be performed using, for example, an isostatic press, a roll press, and/or a plate press.

An all-solid secondary battery according to an embodiment may be applied to large- and medium-sized batteries and/or energy storage systems (ESS).

Hereinafter, one or more embodiments of the present disclosure will be described in more detail with reference to the following examples and comparative examples. However, these examples are not intended to limit the purpose and scope of the one or more embodiments of the present disclosure.

### Preparation of Negative Electrode Layer Preparation Example 1 (Zn-coated Ni/LMC)

Zinc (Zn) was coated on a nickel (Ni) current collector having a thickness of 10 µm, as a negative current collector, to a thickness of 30 nm to form a Zn coating layer and lithium (Li) was plated on the Zn layer to form a Li porous layer.

A porous structure of lithium was prepared by placing a substrate at a working electrode and a lithium plate (Li plate: thickness of 1 mm) at a counter electrode, locating a common LIB separator having a thickness of 17 nm therebetween, applying a pressure of a clip strength between the two electrodes, and performing galvanic plating (0.38 mA/cm², 4hr) with an LiFSI electrolytic solution (1 M LiFSI in DME:HFE-458 =2:8, v/v).

By roll-pressing the porous structure of lithium, a negative electrode layer including a negative current collector and a first negative active material layer located thereon and including LMC was prepared. During the roll-pressing, a roll press with a normal linear pressure of 1.5 tons was used. Because an area of two rolls of the roll press is approximately 0.2 cm, a pressing pressure is 7.5 ton/cm² (=735 MPa).

### Preparation Examples 2 to 4 and 6 and 7 (Zn-coated Ni/LMC) and Preparation Example 5 (Ni/LMC)

Negative electrode layers were prepared in substantially the same manner as in Preparation Example 1, except that current collectors and coating layers were formed as shown in Table 1 below respectively and lithium was plated using electrolytic solutions having composition ratios as shown in Table 1 below respectively.

### Preparation Example 8 (Zn-coated/LMC/Carbon Layer)

A negative electrode layer was prepared in substantially the same manner as in Preparation Example 1, except that a carbon layer was further formed on the first negative active material layer according to a method described below and as shown in Table 2 below, and a Ni current collector having a thickness of 10 µm was used as a negative current collector.

The carbon layer is a layer formed of 93 wt% of carbon black (CB) having a primary particle diameter of about 30 nm and 7 wt% of a polyvinylidene fluoride (PVDF) binder (Kureha Corporation, # 9300) and has a thickness of about 7 µm after pressing. 0.28 g of the PVDF binder was dissolved in 4 g of N-methylpyrrolidone (NMP) and mixed with 3.72 g of the CB to prepare a slurry. The prepared slurry was coated on a Ni sheet using a bar coater and dried in air at 80 °C for 10 minutes. A laminated structure obtained as described above was dried under vacuum at 40 °C for 10 hours. The dried laminated structure was roll-pressed at a pressure of 300 MPa for 10 minutes to transfer the carbon layer to the first negative active material layer. According to the above-described method, a negative electrode layer in which the carbon layer was formed on the first negative active material (LMC) layer was prepared.

### Comparative Preparation Example 1 (Deposited Lithium Negative Electrode Layer)

Li was deposited on a Ni current collector by using Li tablets (Japan, HJ Metal) at 250 °C to form a negative electrode layer (deposited lithium negative electrode layer) having a thickness of about 10 µm.

### Comparative Preparation Example 2 (Rolled Lithium Negative Electrode Layer)

An Li foil extruded on a Ni current collector by an Li cylinder with a high pressure was rolled and pressed at 25 °C and a pressure of 750 MPa to prepare a negative electrode layer having a thickness of about 20 µm.

### Comparative Preparation Example 3 (Extruded Lithium Negative Electrode Layer)

A solid phase Li was extruded on a Ni current collector by an Li cylinder under high pressure conditions (700 ton) to prepare a negative electrode layer having a thickness of about 100 µm.

Negative electrode layers according to Comparative Preparation Examples 4 and 5 were prepared according to the following process under the conditions shown in Table 2 below.

### Comparative Preparation Example 4 (Composite Material Including Ni/lithium Alloy Powder (LiAl) and Inorganic Compound (Lithium Iodide (Lil)))

A negative electrode layer was prepared by locating a composite material obtained according to the following process on a Ni current collector having a thickness of 10 µm as a negative current collector.

Powder of a lithium alloy (LiAI) was mixed with lithium iodide (Lil), as an inorganic compound, to a volume ratio of 9:1, and the mixture was heat-treated at about 400 °C and cooled to prepare a composite material including lithium alloy powder (LiAl) and lithium iodide (Lil) as an inorganic compound.

### Comparative Preparation Example 5 (Ni/Carbon Layer)

A carbon layer was coated on a negative current collector (Ni) to prepare a negative electrode layer. The coating of the carbon layer was performed in substantially the same manner as in Preparation Example 8. Here, the carbon layer was formed in substantially the same manner as in Preparation Example 8.

### Comparative Preparation Example 6

A negative electrode layer formed of a negative current collector alone was prepared.

**Table 1**

| Example | Process | Substrate | | Electrolytic Solution | | | | |
|---|---|---|---|---|---|---|---|---|
| | Li Formation | Current Collector | Coating Layer | Concentration | Salt | Solvent | | |
| | | | | | | Amount of DME (vol. %) | Name of HFE | Amount of HFE (vol. %) |
| Preparation Example 1 | Plating | Ni | Zn | 1 M | LiFSI | 20 | HFE-458 | 80 |
| Preparation Example 2 | | Ni | Zn | 1 M | | 50 | | 50 |
| Preparation Example 3 | | Ni | Zn | 1 M | | 70 | | 30 |
| Preparation Example 4 | | Ni | Zn | 1 M | | 90 | | 10 |
| Preparation Example 5 | | Ni | - | 5 M | | 100 | | 0 |
| Preparation Example 6 | | Ni | Zn | 1 M | | 100 | HFE-6512 | 80 |
| Preparation Example 7 | | Ni | Zn | 1 M | | 20 | HFE-347 | 80 |
| Comparative Preparation Example 1 | Deposition | Ni | - | | | | | |
| Comparative Preparation Example 2 | Rolling | Ni | | | | | | |
| Comparative Preparation Example 3 | Extrusion | Ni | | | | | | |

**Table 2**

| Example | Current Collector | Coating Layer | First Negative Active Material Layer | Carbon Layer (Protective Layer) |
|---|---|---|---|---|
| Preparation Example 8 | Ni | Zn | LMC | 7 µm |
| Comparative Preparation Example 4 | Ni | None | None | None |
| Comparative Preparation Example 5 | Ni | None | None | 7 µm |

### Preparation of All-solid Secondary Battery

### Example 1

The negative electrode layer of Preparation Example 1 was used.

A process of preparing a solid electrolyte layer is as described below.

99 parts by weight of Li-argyrodite (Li₆PS₅Cl, D₅₀ = 3 µm, crystalline), 1 part by weight of poly(styrene-co-butyl acrylate) as an acrylic binder, and anhydrous octyl acetate were mixed in a Thinky mixer at 1300 rpm for 5 minutes to prepare a positive active material slurry. The slurry was applied to a nonwoven fabric (thickness: 15 µm or less) on a release polyethylene terephthalate (PET; thickness: 75 µm or less) using a Bar coater to form a film, liquid components were removed in a convection oven (80 °C, 10 min), and the resultant was dried in a vacuum oven (40 °C, 10 hr) to prepare a solid electrolyte layer (having a thickness of 90 µm or less before pressing and 45 µm or less after WIP pressing).

The positive electrode layer was prepared according to the following process.

Raw materials, i.e., 84.2 parts by weight of Li₂O-ZrO₂-coated active material (LiNi_{0.6}Co_{0.2}Mn_{0.2} (NCM)), 2.9 parts by weight of a conductive material (carbon nanofiber and carbon black), 11.5 parts by weight of LPSCI (Li₆PS₅Cl, D₅₀ = 0.5 µm, crystalline), 1.4 parts by weight of polytetrafluoroethylene (PTFE), and anhydrous p-xylene were mixed, and the mixture was kneaded and rolled to a set thickness and then vacuum-dried in a vacuum oven (40 °C, 8 hr) to prepare a positive active material.

The vacuum-dried positive electrode layer was laminated on a carboncoated AI current collector and pressed using a roll press to prepare a positive electrode layer.

The negative electrode layer was prepared by Li plating and roll-pressing, the solid electrolyte layer was prepared by wet-coating the slurry on the nonwoven fabric, and the positive electrode layer was prepared by kneading and rolling the materials and roll-pressing the resultant.

The negative electrode layer, the solid electrolyte layer, and the positive electrode layer were sequentially laminated and the laminated structure was vacuumpacked in a pouch and pressed using a warm isostatic press (WIP) at a pressure of 400 MPa to 550 MPa to prepare a unit cell having a negative electrode layer/solid electrolyte layer/positive electrode layer structure.

### Examples 2 to 8

Unit cells having a negative electrode layer/solid electrolyte layer/positive electrode layer structure were prepared in substantially the same manner as in Example 1, except that the negative electrode layers according to Preparation Examples 2 to 8 were respectively used instead of the negative electrode layer of Preparation Example 1.

### Comparative Example 1

A unit cell having a negative electrode layer/solid electrolyte layer/positive electrode layer structure was prepared in substantially the same manner as in Example 1, except that the negative electrode layer according to Comparative Preparation Example 1 was used instead of the negative electrode layer of Preparation Example 1.

The negative electrode layer of Comparative Example 1 could not be applied to an all-solid secondary battery including a sulfide-based solid electrolyte to which high temperature and high pressure are applied due to the softness of the lithium metal.

### Comparative Examples 2 to 6

Unit cells having a negative electrode layer/solid electrolyte layer/positive electrode layer structure were prepared in substantially the same manner as in Example 1, except that the negative electrode layers of Comparative Preparation Examples 2 to 7 were respectively used instead of the negative electrode layer of Preparation Example 1.

### Evaluation Example 1: SEM and TEM Analysis

The negative electrode layer obtained according to Preparation Example 1 was analyzed using a scanning electron microscope (SEM) and a transmission electron microscope (TEM). A SU 8030 (manufactured by Hitachi) was used as the SEM and a FIB-Helios 450F1 (Helios 450F1 manufactured by FEI company) was used as a focused ion beam electron microscope. Cross-sections of samples were pretreated by milling using a Cooling Cross Section Polisher (IB-19520CCP, JOEL) at 6 kV and 320 µA for 1 hour. In addition, the TEM analysis was performed at 3 keV and 0.8 nA.

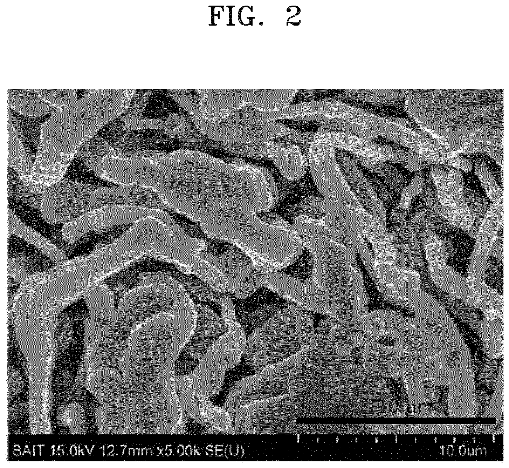

FIG. 2 is an SEM image showing a surface of lithium plated according to Preparation Example 1. Referring thereto, the surface has a structure in which thin lithium strings are loosely entangled.

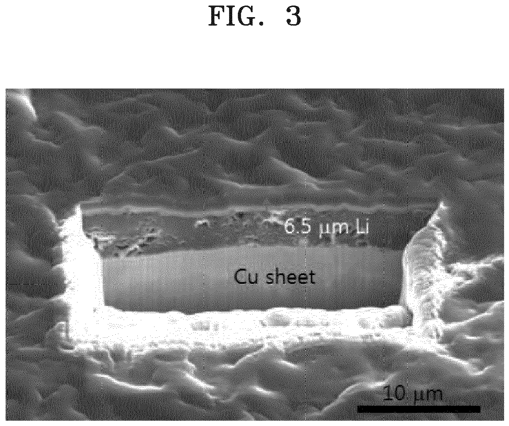

FIG. 3 is a TEM image showing a surface and a cross-section of an LMC layer after pressing.

Referring thereto, the LMC layer had a thickness of about 30 µm before pressing, and the thickness of the LMC layer was controlled to about 6.5 µm after pressing. After pressing, the surface of the LMC layer was very smooth.

A surface roughness Rmax of the LMC layer after pressing was measured using an atomic force microscope (AFM). For comparison of the surface roughness of the LMC layer, a surface roughness of a lithium layer obtained by deposition of lithium according to Comparative Example 1 was also measured.

Referring to the measurement results obtained using the AFM, while the surface roughness Rmax of the lithium layer obtained by deposition of lithium according to Comparative Example 1 was about 1.3 µm, the surface roughness Rmax of the LMC layer was about 0.27 µm, indicating that the surface roughness of the LMC layer decreased compared to that of Comparative Example 1.

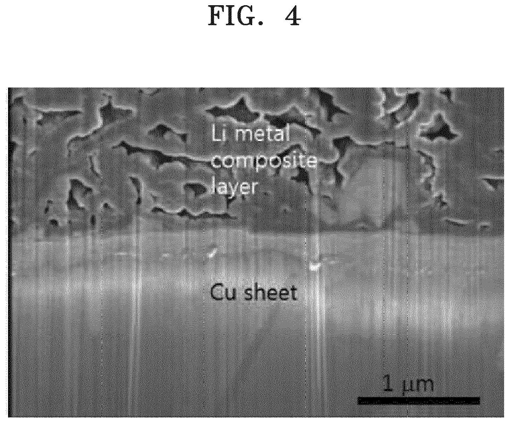

FIG. 4 is a TEM image of a cross-section of an LMC layer after pressing. Referring to the cross-section of the LMC layer, a number of pores and micro-channels each having a size of 0.1 µm to 1 µm were observed. Such pores and micro-channels are caused by porosity of the LMC layer, and the surfaces of lithium strings are coated with an SEI formed of lithium fluoride and having a nanometer-scale thickness, thereby forming a composite product in which lithium metal is complexed with lithium fluoride. Because the LMC has a structure in which lithium is surrounded by hard lithium fluoride, elution or liquefaction of lithium caused by high pressure does not occur (or substantially does not occur).

### Evaluation Example 2: Layer Characteristics

Thin film formation, uniformity, and possibility to apply high pressure of the negative electrode layers obtained according to Preparation Examples 1 to 6 and Comparative Preparation Examples 1 to 3 were evaluated according to a method described below, and evaluation results thereof are shown in Table 3 below. The thickness and thickness deviation of each layer were examined by SEM or TEM analysis.

### (1) Thin Film Formation and Uniformity

Thicknesses of the LMC layers of Preparation Examples 1 to 8 and the negative electrode layers obtained according to Comparative Preparation Examples 1 to 3 were examined. A film thickness of 5 µm is evaluated as excellent thin film formation (O), a film thickness of 15 µm is evaluated as poor thin film formation (△), and a film thickness of 20 µm is evaluated as impossible to form thin film (X).

### (2) Uniformity

Thickness deviations of the respective LMC layers of Preparation Examples 1 to 8 and the respective negative electrode layers obtained according to Comparative Preparation Examples 1 to 3 were examined. A thickness deviation of 5% or less is evaluated as excellent (O) and a thickness deviation of 10% or less is evaluated as poor (X).

### (3) High Pressure Application

Elution or liquefaction of lithium caused by pressing was examined during a process of preparing all-solid secondary batteries.

When lithium is not eluted or liquefied, it is evaluated as possible to apply high pressure (O), and when lithium is eluted or liquefied, it is evaluated as impossible to apply high pressure (X).

**Table 3**

| Example | Thin Film Formation | Uniformity | High Pressure Application |
|---|---|---|---|
| Preparation Example 1 | O | O | O |
| Preparation Example 2 | O | O | O |
| Preparation Example 3 | O | O | O |
| Preparation Example 4 | O | O | O |
| Preparation Example 5 | O | O | O |
| Preparation Example 6 | O | O | O |
| Preparation Example 7 | O | O | O |
| Preparation Example 8 | O | O | O |
| Comparative Preparation Example 1 | O | O | X |
| Comparative Preparation Example 2 | X | O | X |
| Comparative Preparation Example 3 | X | O | X |

Referring to Table 3, it can be seen that the negative electrode layers according to Preparation Examples 1 to 8 are formed as thin films, have uniformity, and are available under high-pressure conditions, when compared with those of Comparative Preparation Examples 1 to 3. The above-described results were obtained because the negative electrode layers according to Preparation Examples 1 to 8 have a high Young's modulus by including the LMC layer, thereby inhibiting or reducing microshort-circuits during pressing, but microshort-circuits occurred while pressing the negative electrode layers according to Comparative Preparation Examples 1 to 3.

### Evaluation Example 3: X-ray photoelectron spectroscopy (XPS) and Young's modulus Analysis

XPS analyses of the negative electrode layers obtained according to Preparation Example 1 and Comparative Preparation Example 1 were performed. XPS analyses were performed using a K-alpha X-ray photoelectron spectrometer manufactured by Thermo Scientific.

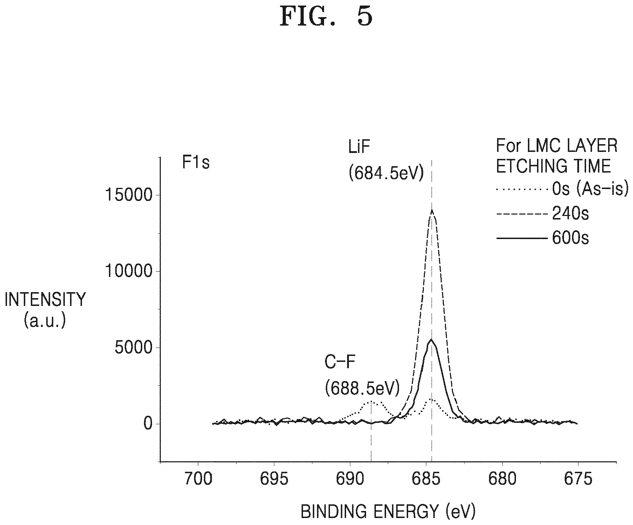

XPS analyses results are shown in FIG. 5. In FIG. 5, 0s indicates a case where the LMC layer was etched for 0 second, 240s indicates a case where the LMC layer was etched for 240 hours, and 600s indicates a case where the LMC layer was etched for 600 hours.

Referring to FIG. 5, when the LMC layer was analyzed by XPS, LiF, which was not observed in the deposited Li obtained according to Comparative Preparation Example 1, was observed. For example, LiF was observed in the LMC layer of Preparation Example 1, but was not observed in the deposited Li of Comparative Example 1. Although C-F and LiF were observed in an AS-is layer (the unetched layer), only LiF was observed therein in FIG. 5.

After argon (Ar) ion etching for 600 seconds, amounts of elements of the deposited lithium layer according to Comparative Preparation Example 1 and the LMC layer of Preparation Example 1 were analyzed and the results are shown in Table 4 below.

**Table 4**

| Example | Amount (at%) | | | |
|---|---|---|---|---|
| | Lithium (Li) | Oxygen (O) | Carbon (C) | Fluorine (F) |
| Preparation Example 1 | 55 | 35.8 | 7 | 2.2 |
| Comparative Preparation Example 1 | 58 | 37 | 5 | - |

As shown in Table 4, the LMC layer of Preparation Example 1 has a lower Li content than that of the deposited Li according to Comparative Preparation Example 1 by about 3 at% but includes 2.2 at% of F. In consideration of pores and micro-channels in the LMC layer, the Li content of the LMC layer is lower than that of the deposited Li of Comparative Preparation Example 1 having the same thickness by about 5 to 10 at%

Young's moduli of the negative electrode layers obtained according to Preparation Example 1 and Comparative Preparation Example 1 were also measured. The Young's modulus of each negative electrode layer was measured using a DMA Q800 (manufactured by TA Instruments), and the specimen of the negative electrode layer was prepared according to ASTM standard D412 (Type V specimens). The Young's modulus may also be referred to as tensile modulus.

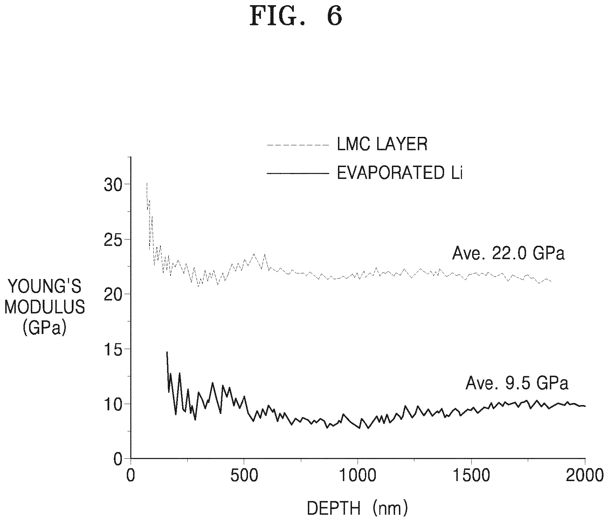

Analysis results of the Young's modulus are shown in FIG. 6. FIG. 6 shows moduli of elasticity of the LMC layer of Preparation Example 1 and the deposited lithium layer of Comparative Preparation Example 1 with respect to depth of the layers. In FIG. 6, "LMC layer" indicates the result of the LMC layer, and "Evaporated Li" indicates the result of the deposited lithium layer.

Referring thereto, the modulus of elasticity of the LMC layer is about two times higher than that of deposited Li. The modulus of elasticity is an average value of 3 × 3 points at an interval of 50 µm using a commercially available Micro-indenter (iMicro, Nanomechanics, Inc.). Because highly elastic LiF is included in a composite form, the LMC layer has a high modulus of elasticity.

Referring to the results of FIG. 5, the deposited Li layer of Comparative Preparation Example 1 is suitable as a candidate for the Li reservoir in terms of the Li content and thin film formation in the same thickness. However, when the negative electrode layers are used in sulfide-based all-solid secondary batteries in which high pressure process is required, the modulus of elasticity and hardness of the Li reservoir needs to be considered, and thus Young's modulus characteristics are important. As shown in FIG. 6, the LMC layer of Preparation Example 1 has far better Young's modulus characteristics than those of the deposited Li layer of Comparative Preparation Example 1, and thus the LMC layer is suitable as the negative electrode layer of the sulfide-based all-solid secondary battery.

### Evaluation Example 4: Hardness Analysis

Hardness of the LMC layer of Preparation Example 1 and the deposited lithium layer of Comparative Preparation Example 1 was examined. Hardness was evaluated using a Micro-indenter (iMicro, Nanomechanics, Inc.).

Based on evaluation results, it was confirmed that the LMC layer had a far higher surface hardness than that of the deposited Li layer and the inside of the LMC layer had a higher hardness than that of the deposited Li layer. On average, an increase in hardness by about 6 times was confirmed. When the hardness of the layer decreases, the Li reservoir may be deformed while pressing the sulfide-based solid electrolyte layer under high-temperature and high-pressure conditions, and lithium may penetrate the solid electrolyte layer to cause problems such as cracks and short-circuits. However, by using the LMC layer of Preparation Example 1, the above-described issues may be prevented or reduced in advance.

### Evaluation Example 5: Efficiency and Lifespan Characteristics

Charging and discharging characteristics of the all-solid secondary batteries prepared according to Example 8 and Comparative Examples 2 to 5 were evaluated using a charge/discharger (Manufacturer: TOYO, Model: TOYO-3100).

In a first charging and discharging cycle, each battery was charged at a constant current of 0.1 C until a voltage reached 4.25 V and charged at a constant voltage until the current reached 0.05 C. The charged cell was rested for about 10 minutes and discharged at a constant current of 0.1 C until the voltage reached 2.5 V. In a second charging and discharging cycle, each battery was charged at a constant current of 0.2 C until a voltage reached 4.25 V and charged at a constant voltage until the current reached 0.05 C. The charged cell was rested for about 10 minutes and discharged at a constant current of 0.2 C until the voltage reached 2.5 V.

Lifespan evaluation was performed by charging the cell at a constant current of 1 C until the voltage reached 4.25 V and at a constant voltage until the current reached 0.05 C. The charged cell was rested for about 10 minutes and discharged at a constant current of 1 C until the voltage reached 2.5 V, and this cycle was repeated 200 times for evaluation.

Capacity retention ratio (CRR) was calculated by Equation 1 below, charge/discharge efficiency was calculated by Equation 2 below, and capacity retention ratio and charge/discharge efficiency characteristics were examined and shown in Table 5 below. Capacity retention ratio (Lifespan) [%] = [discharge capacity of 200th cycle/discharge capacity of 1st cycle] × 100 Charge/discharge efficiency = [average discharge voltage of 200th cycle/average charge voltage of 200th cycle] X100

**Table 5**

| Example | Charge/discharge efficiency (%) | Capacity retention ratio (@50 times)(%) |
|---|---|---|
| Example 8 | 99.99 | 86.0 |
| Comparative Example 5 | 99.91 | 79.0 |

Referring to Table 5, it can be seen that the all-solid secondary battery prepared according to Example 8 had higher charge/discharge efficiency and improved lifespan characteristics when compared with the all-solid secondary battery of Comparative Example 5. In addition, it was difficult to measure charge/discharge efficiency and lifespan characteristics of the all-solid secondary batteries according to Comparative Examples 2 to 4 because microshort-circuits occurred during initial charging.

### Evaluation Example 6: Lifespan Characteristics

Charging and discharging characteristics of the all-solid secondary batteries prepared according to Example 8 and Comparative Example 5 were evaluated using a charger/discharger (Manufacturer: TOYO, Model: TOYO-3100).

In a first charging and discharging cycle, each battery was charged at a current of 0.1 C until a voltage reached 4.2 V. The charged cell was rested for about 10 minutes and discharged at a constant current of 0.1 C until the voltage reached 2.5 V. In a second charging and discharging cycle, each battery was charged at a current of 0.2 C until the voltage reached 4.2 V. The charged cell was rested for about 10 minutes and discharged at a constant current of 0.2 C until the voltage reached 2.5 V.

Lifespan evaluation was performed by charging the cell at a current of 0.33 C until the voltage reached 4.2 V. The charged cell was rested for about 10 minutes and discharged at a constant current of 0.33 C until the voltage reached 2.5 V, and this cycle was repeated 230 times for evaluation.

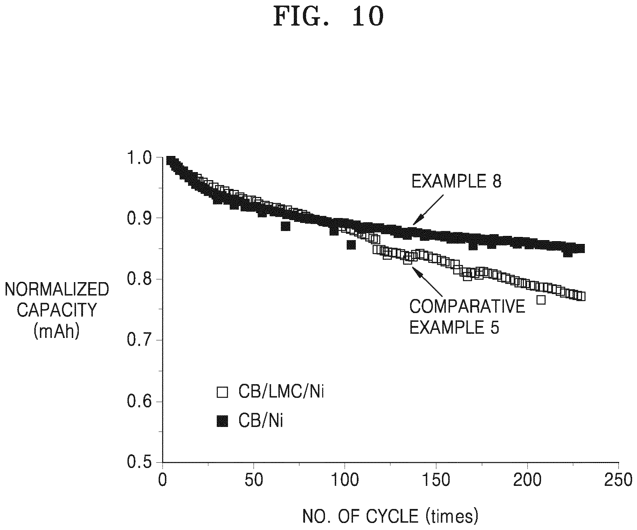

Capacity retention ratios (lifespan) were evaluated and shown in FIG. 10.

Referring to FIG. 10, it can be seen that the all-solid secondary battery of Example 8 had improved capacity retention ratio compared with the all-solid secondary battery of Comparative Example 5. The all-solid secondary battery of Example 8 includes the negative electrode layer in which a carbon layer is further formed on the first negative active material layer. The carbon layer formed as described above further assisted uniform Li nucleation and uniform growth of Li, thereby further improving capacity retention ratio when compared with a case in which the carbon layer was not formed.

The all-solid secondary battery according to an embodiment includes the negative active material layer including the lithium metal composite and formed on the negative current collector, thereby preventing or reducing liquefaction of lithium which is caused when lithium metal is applied to the negative electrode layer. Also, by using the negative electrode layer, lithium loss of the negative electrode layer caused in the first charging and lithium loss caused by interfacial side reactions during operation of a battery may be compensated, so that an all-solid secondary battery having high capacity, high voltage, high energy density, and/or improved lifespan characteristics may be prepared.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A negative electrode layer (20) for a sulfide-based solid electrolyte-containing all-solid secondary battery (1), comprising:
a negative current collector (21) and a first negative active material layer (22) on the negative current collector (21),
wherein the first negative active material layer (22) comprises a lithium metal composite (28) comprising lithium metal and an inorganic negative active material, and
wherein the inorganic negative active material comprises lithium fluoride, lithium oxide, lithium carbonate, lithium hydroxide, or any combination thereof,
wherein the negative electrode layer (20) further comprises a thin film of a metal and/or a metalloid between the negative current collector (21) and the first negative active material layer (22).

2. The negative electrode layer (20) of claim 1, wherein an amount of the lithium metal in the lithium metal composite (28) is in a range of 70 parts by weight to 99 parts by weight based on 100 parts by weight of the lithium metal composite, and the lithium metal composite (28) is a product obtained by pressurizing a porous structure of a lithium (26) coated with a solid electrolyte interface, SEI, layer (27).

3. The negative electrode layer (20) of any one of claims 1 or 2, wherein the thin film of the metal and/or the metalloid comprises gold (Au), silver (Ag), magnesium (Mg), zinc (Zn), silicon (Si), tin (Sn), platinum (Pt), palladium (Pd), aluminum (Al), bismuth (Bi), or any combination thereof, and a thickness of the thin film of the metal or the metalloid is in a range of 1 nm to 800 nm.

4. The negative electrode layer (20) of any one of claims 1 to 3, wherein the negative electrode layer (20) further comprises a second negative active material layer,
wherein the second negative active material layer comprises a metal, a metalloid element, or any combination thereof, each alloyable with lithium, and
the second negative active material layer comprises a metal layer comprising lithium and/or a lithium alloy.

5. An all-solid secondary battery (1) comprising:
a positive electrode layer (10); a negative electrode layer (20); a sulfide-based solid electrolyte layer (30) interposed between the positive electrode layer (10) and the negative electrode layer (20),
wherein the negative electrode layer (20) is an negative electrode layer (20) according to any one of claims 1 to 4.

6. The all-solid secondary battery (1) of claim 5, wherein a second negative active material layer is located on the first negative active material layer (22).

7. The all-solid secondary battery (1) of claim 5 or 6, wherein the all-solid secondary battery (1) further comprises a carbon layer between the first negative active material layer (22) and the sulfide-based solid electrolyte layer (30).

8. The all-solid secondary battery (1) of any one of claims 5 to 7, wherein the sulfide-based solid electrolyte layer (30) comprises at least one selected from Li₂S-P₂S₅, Li₂S-P₂S₅-LiX wherein X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ wherein m and n are positive numbers and Z is Ge, Zn, or Ga, Li₂S-GeS₂, Li₂S-SiS₂-Li₃PO₄, Li₂S-SiS₂-LiₚMO_{q} wherein p and q are positive numbers and M is P, Si, Ge, B, Al, Ga, or In, Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2.

9. The all-solid secondary battery (1) of any one of claims 5 to 8, wherein the sulfide-based solid electrolyte layer (30) comprises an argyrodite-type solid electrolyte comprising at least one selected from Li₆PS₅Cl, Li₆PS₅Br, and Li₆PS₅I;
optionally wherein the argyrodite-type solid electrolyte has a density in a range of 1.5 g/cc to 2.0 g/cc.

10. A method of preparing an all-solid secondary battery (1), the method comprising:
providing a negative electrode layer (20) comprising a negative current collector (21) and a first negative active material layer (22) on the negative current collector (21);
providing a positive electrode layer (10);
preparing a laminated structure by providing a solid electrolyte layer (30) comprising a sulfide-based solid electrolyte between the negative electrode layer (20) and the positive electrode layer (10); and
pressing the laminated structure,
wherein the first negative active material layer (22) comprises a lithium metal composite (28) comprising lithium metal and an inorganic negative active material,
wherein: the providing of the negative electrode layer (20) comprises: plating lithium on the negative current collector (21) to prepare a plated lithium layer; and
pressing the plated lithium layer,
thereby preparing the negative electrode layer (20) comprising the negative current collector (21) and the first negative active material layer (22) comprising the lithium metal composite (28), and
the method further comprises:
forming a metal coating layer (25) for lithium nucleation on the negative current collector (21) before performing the plating of lithium on the negative current collector (21), and
then performing the plating of lithium on the metal coating layer (25) to prepare the negative electrode layer (20) comprising the negative current collector (21), the metal coating layer (25) for lithium nucleation, and the first negative active material layer (22) comprising the lithium metal composite (28).

11. The method of claim 10, wherein the plating of lithium is performed by using a lithium plate and a liquid electrolyte that includes a lithium salt and an organic solvent;
optionally wherein the organic solvent is a mixed solvent comprising a glyme-based solvent and a fluorinated ether-based solvent, and an amount of the fluorinated ether-based solvent is in a range of 10 vol% to 95 vol% based on a total volume of the mixed solvent;
optionally wherein the glyme-based solvent comprises at least one selected from ethyleneglycol, dimethyl ether (DME), diethyltetraethyleneglycol dimethyl ether (TEGDME), and diethyleneglycol dimethylether (DEGDME), and the fluorinated ether-based solvent comprises 1,1,2,2-tetrafluoroethyl-2,2,3,3-tetrafluoropropyl ether, 1,1,2,2,-tetrafluoroethyl-1H,1H,5H-octafluoropentyl ether, 1,1,2,2-tetrafluoroethyl-2,2,2-trifluoroethyl ether, or any mixture thereof.

## Patentansprüche

1. Negative Elektrodenschicht (20) für eine einen sulfidbasierten Festelektrolyten enthaltende Festkörpersekundärbatterie (1), umfassend:
einen negativen Stromabnehmer (21) und eine erste negative Aktivmaterialschicht (22) auf dem negativen Stromabnehmer (21),
wobei die erste negative Aktivmaterialschicht (22) einen Lithiummetall-Kompositwerkstoff (28) umfasst, der Lithiummetall und ein anorganisches negatives Aktivmaterial umfasst, und
wobei das anorganische negative Aktivmaterial Lithiumfluorid, Lithiumoxid, Lithiumcarbonat, Lithiumhydroxid oder eine beliebige Kombination davon umfasst,
wobei die negative Elektrodenschicht (20) ferner einen dünnen Film aus einem Metall und/oder einem Halbmetall zwischen dem negativen Stromabnehmer (21) und der ersten negativen Aktivmaterialschicht (22) umfasst.

2. Negative Elektrodenschicht (20) nach Anspruch 1, wobei eine Menge des Lithiummetalls in dem Lithiummetall-Kompositwerkstoff (28) in einem Bereich von 70 Gewichtsteilen bis 99 Gewichtsteilen, bezogen auf 100 Gewichtsteile des Lithiummetall-Kompositwerkstoffs, liegt und der Lithiummetall-Kompositwerkstoff (28) ein Produkt ist, das durch Druckbeaufschlagen einer porösen Struktur aus Lithium (26), die mit einer Festelektrolytschnittstellen(*solid electrolyte interface* - SEI)-Schicht (27) beschichtet ist, erhalten wird.

3. Negative Elektrodenschicht (20) nach einem der Ansprüche 1 oder 2, wobei der dünne Film aus dem Metall und/oder dem Halbmetall Gold (Au), Silber (Ag), Magnesium (Mg), Zink (Zn), Silicium (Si), Zinn (Sn), Platin (Pt), Palladium (Pd), Aluminium (Al), Bismut (Bi) oder eine beliebige Kombination davon umfasst und eine Dicke des dünnen Films aus dem Metall oder dem Halbmetall in einem Bereich von 1 nm bis 800 nm liegt.

4. Negative Elektrodenschicht (20) nach einem der Ansprüche 1 bis 3, wobei die negative Elektrodenschicht (20) ferner eine zweite negative Aktivmaterialschicht umfasst,
wobei die zweite negative Aktivmaterialschicht ein Metall, ein halbmetallisches Element oder eine beliebige Kombination davon umfasst, die jeweils mit Lithium legierbar sind, und
die zweite negative Aktivmaterialschicht eine Metallschicht umfasst, die Lithium und/oder eine Lithiumlegierung umfasst.

5. Festkörpersekundärbatterie (1), umfassend:
eine positive Elektrodenschicht (10); eine negative Elektrodenschicht (20); eine sulfidbasierte Festelektrolytschicht (30), die zwischen der positiven Elektrodenschicht (10) und der negativen Elektrodenschicht (20) angeordnet ist,
wobei die negative Elektrodenschicht (20) eine negative Elektrodenschicht (20) nach einem der Ansprüche 1 bis 4 ist.

6. Festkörpersekundärbatterie (1) nach Anspruch 5, wobei sich auf der ersten negativen Aktivmaterialschicht (22) eine zweite negative Aktivmaterialschicht befindet.

7. Festkörpersekundärbatterie (1) nach Anspruch 5 oder 6, wobei die Festkörpersekundärbatterie (1) ferner eine Kohlenstoffschicht zwischen der ersten negativen Aktivmaterialschicht (22) und der sulfidbasierten Festelektrolytschicht (30) umfasst.

8. Festkörpersekundärbatterie (1) nach einem der Ansprüche 5 bis 7, wobei die sulfidbasierte Festelektrolytschicht (30) wenigstens eines, ausgewählt aus Li₂S-P₂S₅, Li₂S-P₂S₅-LiX, wobei X ein Halogenatom ist, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wobei m und n positive Zahlen sind und Z Ge, Zn oder Ga ist, Li₂S-GeS₂, Li₂S-SiS₂-Li₃PO₄, Li₂S-SiS₂-LiₚMO_{q}, wobei p und q positive Zahlen sind und M P, Si, Ge, B, Al, Ga oder In ist, Li₇₋ₓPS₆₋ₓClₓ, wobei 0≤x≤2, Li₇₋ₓPS₆₋ₓBrₓ, wobei 0≤x≤2, und Li₇₋ₓPS₆₋ₓIₓ, wobei 0≤x≤2, umfasst.

9. Festkörpersekundärbatterie (1) nach einem der Ansprüche 5 bis 8, wobei die sulfidbasierte Festelektrolytschicht (30) einen Festelektrolyten vom Argyrodit-Typ umfasst, der wenigstens eines, ausgewählt aus Li₆PS₅Cl, Li₆PS₅Br und Li₆PS₅I, umfasst;
wobei optional der Festelektrolyt vom Argyrodit-Typ eine Dichte in einem Bereich von 1,5 g/cm³ bis 2,0 g/cm³ aufweist.

10. Verfahren zur Herstellung einer Festkörpersekundärbatterie (1), wobei das Verfahren Folgendes umfasst:
Bereitstellen einer negativen Elektrodenschicht (20), die einen negativen Stromabnehmer (21) und eine erste negative Aktivmaterialschicht (22) auf dem negativen Stromabnehmer (21) umfasst;
Bereitstellen einer positiven Elektrodenschicht (10);
Herstellen einer laminierten Struktur durch Bereitstellen einer Festelektrolytschicht (30), die einen sulfidbasierten Festelektrolyten umfasst, zwischen der negativen Elektrodenschicht (20) und der positiven Elektrodenschicht (10); und
Druckbeaufschlagen der laminierten Struktur,
wobei die erste negative Aktivmaterialschicht (22) einen Lithiummetall-Kompositwerkstoff (28) umfasst, der Lithiummetall und ein anorganisches negatives Aktivmaterial umfasst,
wobei: das Bereitstellen der negativen Elektrodenschicht (20) umfasst: Aufbringen von Lithium auf den negativen Stromabnehmer (21), um eine aufgebrachte Lithiumschicht herzustellen; und
Druckbeaufschlagen der aufgebrachten Lithiumschicht,
dadurch Herstellen der negativen Elektrodenschicht (20), die den negativen Stromabnehmer (21) und die erste negative Aktivmaterialschicht (22), die den Lithiummetall-Kompositwerkstoff (28) umfasst, umfasst, und
das Verfahren ferner Folgendes umfasst:
Ausbilden einer Metallbeschichtungsschicht (25) zur Lithium-Keimbildung auf dem negativen Stromabnehmer (21), bevor das Vornehmen des Aufbringens von Lithium auf den negativen Stromabnehmer (21) erfolgt, und
anschließendes Vornehmen des Aufbringens von Lithium auf die Metallbeschichtungsschicht (25), um die negative Elektrodenschicht (20) herzustellen, die den negativen Stromabnehmer (21), die Metallbeschichtungsschicht (25) zur Lithium-Keimbildung und die erste negative Aktivmaterialschicht (22), die den Lithiummetall-Kompositwerkstoff (28) umfasst, umfasst.

11. Verfahren nach Anspruch 10, wobei das Aufbringen von Lithium unter Verwendung einer Lithiumplatte und eines flüssigen Elektrolyten, der ein Lithiumsalz und ein organisches Lösungsmittel umfasst, erfolgt;
wobei optional das organische Lösungsmittel ein gemischtes Lösungsmittel ist, das ein Lösungsmittel auf Basis von Glyme und ein Lösungsmittel auf Basis von fluoriertem Ether umfasst, und eine Menge des Lösungsmittels auf Basis von fluoriertem Ether in einem Bereich von 10 Vol.-% bis 95 Vol.-%, bezogen auf ein Gesamtvolumen des gemischten Lösungsmittels, liegt;
wobei optional das Lösungsmittel auf Basis von Glyme wenigstens eines, ausgewählt aus Ethylenglykol, Dimethylether (DME), Diethyltetraethylenglykoldimethylether (TEGDME) und Diethylenglykoldimethylether (DEGDME), umfasst und das Lösungsmittel auf Basis von fluoriertem Ether 1,1,2,2-Tetrafluorethyl-2,2,3,3-tetrafluorpropylether, 1,1,2,2-Tetrafluorethyl-1H,1H,5H-octafluorpentylether, 1,1,2,2-Tetrafluorethyl-2,2,2-trifluorethylether oder eine beliebige Mischung daraus umfasst.

## Revendications

1. Couche d'électrode négative (20) pour une batterie secondaire tout-solide contenant un électrolyte solide à base de sulfure (1), comprenant :
un collecteur de courant négatif (21) et une première couche de matériau actif négatif (22) sur le collecteur de courant négatif (21),
dans laquelle la première couche de matériau actif négatif (22) comprend un composite au métal lithium (28) comprenant du métal lithium et un matériau actif négatif inorganique, et
dans laquelle le matériau actif négatif inorganique comprend du fluorure de lithium, de l'oxyde de lithium, du carbonate de lithium, de l'hydroxyde de lithium, ou toute combinaison de ceux-ci,
dans laquelle la couche d'électrode négative (20) comprend en outre un film mince constitué d'un métal et/ou d'un métalloïde entre le collecteur de courant négatif (21) et la première couche de matériau actif négatif (22).

2. Couche d'électrode négative (20) selon la revendication 1, dans laquelle une quantité du métal lithium dans le composite au métal lithium (28) est dans une plage de 70 parties en poids à 99 parties en poids sur la base de 100 parties en poids du composite au métal lithium, et le composite au métal lithium (28) est un produit obtenu en mettant sous pression une structure poreuse d'un lithium (26) revêtue d'une couche (27) d'interface d'électrolyte solide, SEI.

3. Couche d'électrode négative (20) selon l'une quelconque des revendications 1 ou 2, dans laquelle le film mince constitué du métal et/ou du métalloïde comprend de l'or (Au), argent (Ag), magnésium (Mg), zinc (Zn), silicium (Si), étain (Sn), platine (Pt), palladium (Pd), aluminium (Al), bismuth (Bi), ou toute combinaison de ceux-ci, et une épaisseur du film mince constitué du métal ou du métalloïde est dans une plage de 1 nm à 800 nm.

4. Couche d'électrode négative (20) selon l'une quelconque des revendications 1 à 3, dans laquelle la couche d'électrode négative (20) comprend en outre une deuxième couche de matériau actif négatif,
dans laquelle la deuxième couche de matériau actif négatif comprend un métal, un élément métalloïde, ou toute combinaison de ceux-ci, chacun pouvant être allié à du lithium, et
la deuxième couche de matériau actif négatif comprend une couche métallique comprenant du lithium et/ou un alliage de lithium.

5. Batterie secondaire tout-solide (1) comprenant :
une couche d'électrode positive (10) ; une couche d'électrode négative (20) ; une couche d'électrolyte solide à base de sulfure (30) interposée entre la couche d'électrode positive (10) et la couche d'électrode négative (20),
dans laquelle la couche d'électrode négative (20) est une couche d'électrode négative (20) selon l'une quelconque des revendications 1 à 4.

6. Batterie secondaire tout-solide (1) selon la revendication 5, dans laquelle une deuxième couche de matériau actif négatif est située sur la première couche de matériau actif négatif (22).

7. Batterie secondaire tout-solide (1) selon la revendication 5 ou 6, dans laquelle la batterie secondaire tout-solide (1) comprend en outre une couche de carbone entre la première couche de matériau actif négatif (22) et la couche d'électrolyte solide à base de sulfure (30).

8. Batterie secondaire tout-solide (1) selon l'une quelconque des revendications 5 à 7, dans laquelle la couche d'électrolyte solide à base de sulfure (30) comprend au moins un élément sélectionné parmi Li₂S-P₂S₅, Li₂S-P₂S₅-LiX où X est un atome d'halogène, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ où m et n sont des nombres positifs et Z est Ge, Zn ou Ga, Li₂S-GeS₂, Li₂S-SiS₂-Li₃PO₄, Li₂S-SiS₂-LiₚMO_{q} où p et q sont des nombres positifs et M est P, Si, Ge, B, Al, Ga ou In, Li₇₋ₓPS₆₋ₓClₓ où 0≤x≤ 2, Li₇₋ₓPS₆₋ₓBrₓ où 0≤x≤ 2, et Li₇₋ₓPS₆₋ₓlₓ où 0≤x≤ 2.

9. Batterie secondaire tout-solide (1) selon l'une quelconque des revendications 5 à 8, dans laquelle la couche d'électrolyte solide à base de sulfure (30) comprend un électrolyte solide de type argyrodite comprenant au moins un élément sélectionné parmi Li₆PS₅Cl, Li₆PS₅Br, et Li₆PS₅l ;
facultativement, dans laquelle l'électrolyte solide de type argyrodite a une densité dans une plage de 1,5 g/cm³ à 2,0 g/cm³.

10. Procédé de préparation d'une batterie secondaire tout-solide (1), le procédé comprenant :
la fourniture d'une couche d'électrode négative (20) comprenant un collecteur de courant négatif (21) et une première couche de matériau actif négatif (22) sur le collecteur de courant négatif (21) ;
la fourniture d'une couche d'électrode positive (10) ;
la préparation d'une structure stratifiée en fournissant une couche d'électrolyte solide (30) comprenant un électrolyte solide à base de sulfure entre la couche d'électrode négative (20) et la couche d'électrode positive (10) ; et
le pressage de la structure stratifiée,
dans lequel la première couche de matériau actif négatif (22) comprend un composite au métal lithium (28) comprenant du métal lithium et un matériau actif négatif inorganique,
dans lequel : la fourniture de la couche d'électrode négative (20) comprend : le placage de lithium sur le collecteur de courant négatif (21) pour préparer une couche de lithium plaquée ; et
le pressage de la couche de lithium plaquée,
préparant ainsi la couche d'électrode négative (20) comprenant le collecteur de courant négatif (21) et la première couche de matériau actif négatif (22) comprenant le composite au métal lithium (28), et
le procédé comprend en outre :
la formation d'une couche de revêtement métallique (25) pour une nucléation de lithium sur le collecteur de courant négatif (21) avant de réaliser le placage de lithium sur le collecteur de courant négatif (21), et
puis la réalisation du placage de lithium sur la couche de revêtement métallique (25) pour préparer la couche d'électrode négative (20) comprenant le collecteur de courant négatif (21), la couche de revêtement métallique (25) pour une nucléation de lithium, et la première couche de matériau actif négatif (22) comprenant le composite au métal lithium (28).

11. Procédé selon la revendication 10, dans lequel le placage de lithium est réalisé en utilisant une plaque de lithium et un électrolyte liquide qui comporte un sel de lithium et un solvant organique ;
facultativement, dans lequel le solvant organique est un solvant mixte comprenant un solvant à base de glyme et un solvant à base d'éther fluoré, et une quantité du solvant à base d'éther fluoré est dans une plage de 10 % en volume à 95 % en volume sur la base d'un volume total du solvant mixte ;
facultativement, dans lequel le solvant à base de glyme comprend au moins l'un choisi parmi de l'éthylèneglycol, éther diméthylique (DME), éther diméthylique de diéthyltétraéthylèneglycol (TEGDME) et éther diméthylique de diéthylèneglycol (DEGDME), et le solvant à base d'éther fluoré comprend de l'éther de 1,1,2,2-tétrafluoroéthyl-2,2,3,3-tétrafluoropropyle, éther de 1,1,2,2,-tétrafluoroéthyl-1H,1H,5H-octafluoropentyle, éther de 1,1,2,2-tétrafluoroéthyl-2,2,2-trifluoroéthyle, ou tout mélange de ceux-ci.
